(19) Europäisches Patentamt / European Patent Office / Office européen des brevets

(11) **EP 4 301 653 B1**

(12) **EUROPEAN PATENT SPECIFICATION**

(45) Date of publication and mention
of the grant of the patent:
**18.12.2024 Bulletin 2024/51**

(21) Application number: **22711092.1**

(22) Date of filing: **25.02.2022**

(51) International Patent Classification (IPC):
**B62K 21/26** (2006.01)     **B25D 17/04** (2006.01)
**B25F 5/00** (2006.01)       **F16F 15/08** (2006.01)

(52) Cooperative Patent Classification (CPC):
**B62K 21/26; B25F 5/006; F16F 1/377; F16F 15/08;**
B25D 17/043; F16F 2222/12; F16F 2228/001

(86) International application number:
**PCT/IB2022/051673**

(87) International publication number:
**WO 2022/185169 (09.09.2022 Gazette 2022/36)**

(54) **ANTI-VIBRATION HANDLE GRIP**

ANTIVIBRATIONSGRIFF

POIGNÉE DE PRÉHENSION ANTI-VIBRATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2021 IT 202100004691**

(43) Date of publication of application:
**10.01.2024 Bulletin 2024/02**

(73) Proprietors:
• **Pirrotta, Antonina**
  **90139 Palermo (IT)**
• **Evola, Andrea**
  **90045 Cinisi (PA) (IT)**

(72) Inventors:
• **Pirrotta, Antonina**
  **90139 Palermo (IT)**
• **Evola, Andrea**
  **90045 Cinisi (PA) (IT)**

(74) Representative: **Leone, Mario et al
Cantaluppi & Partners S.r.l.
VIA XX Settembre, 98g
00187 Roma (IT)**

(56) References cited:
EP-A1- 1 051 324     FR-A- 933 451
JP-U- S5 037 249     US-A- 2 618 986
US-A- 599 131

EP 4 301 653 B1

**Description**

The present invention relates to an anti-vibration handle grip, in particular for use as handle grip of the handlebar of motorcycles, bicycles, scooters, motorbikes and other vehicles equipped with handlebar as steering member, whereon the driver keeps his/her own hands on the handle grips.

Such handle grip is adapted to be mounted on a fixed or rotating receiving stem, and it is arranged to be grasped by one hand, and on this regard the handle grip has a proximal end, adjacent to the thumb, and a distal end, adjacent to the little finger.

However, it is to be meant that the anti-vibration handle grip according to the present invention could also be used in any mechanical apparatus providing for the use of handle grips subjected to vibrations, such as, by way of examples, pneumatic hammers, chainsaws, mowers and so on.

Whoever has ridden a motorcycle for several kilometres will have felt an unpleasant tingling sensation in their hand. Such tingling is induced by the vibrations which are transmitted through the wheels and the engine to the handlebar, and then to the handle grips whereon the driver keeps constantly his/her hands. The tingling, and other unpleasant sensations associated to grasping a vibrating handle grip, can cause different more or less severe pathologies, thereof the most common example is the so-called carpal tunnel syndrome.

The carpal tunnel is a strict and stiff passage consisting, at the wrist skeleton, of the ligament and of the bones at the hand basis. Inside thereof the median nerve and the tendons pass. Sometimes, the enlargement of the tendons or other conditions, like those mentioned above, induce a swelling of inflammatory origin, which in turn restricts the tunnel, by making that the median nerve is compressed, causing unpleasant sensations of pain and weakness or numbness to hand and wrist, which irradiate towards the arm.

However, such sensations not only are unpleasant, but can jeopardize the driving capability of the driver, and then the safety in using a vehicle controlled by handlebar. By analysing the vibrations induced on the human wrist while driving a motorcycle, one has thought to implement handle grips capable of attenuating the sensations mentioned previously, and their clinical consequences. The state of art provides for the use of handle grips made of soft material such as rubber and the like, but this does not limit the transmission of vibrations to an extent sufficient to contrast the above-described phenomenon.

French patent No. FR 933,451, which is considered being the closest prior art, describes an anti-vibration handle grip having a casing, enclosed around a stem, having internally empty spaces which make it deformable. Similar handle grips are described in US patents No. 2,618,986 A and No. 599,131 A, in Japanese utility model No. JP S 5,037,249 U and in International patent application No. WO 99/39,970 A1.

The technical problem underlying the present invention is to provide an anti-vibration handle grip allowing to obviate the drawback mentioned with reference to the known art.

Such problem is solved by a handle grip as specified above, which characterizes in that it comprises an internal cylinder, which is fitted on the receiving stem; and an external casing, enclosing said internal cylinder from a proximal end to a distal end of the anti-vibration handle grip, and which is connected to said internal cylinder by means of a sequence of circumferential junctions, forming a corresponding sequence of grooves on the external surface of the external casing and respective inner tubes, formed by the empty space between external casing and internal cylinder, between each one of said grooves.

In the anti-vibration handle grip according to the present invention the distances between the adjacent grooves in case depend upon the anthropometric measurements of the user's hand, as defined in the enclosed claims, for a customized production and a better adaptation to a user's hand.

The main advantage of the anti-vibration handle grip according to the present invention consists in a significant reduction in the transmitted vibrations, eased by a better adaptation of the handle grip to the anthropometric features of the driver's hand.

The present invention will be hereinafter described according to a preferred embodiment example thereof, provided by way of example and not for limitative purposes with reference to the enclosed drawings wherein:

* figure 1 shows a human fist, wherein some significant anthropometric measurements are designated;

* figure 2 shows a front view of an anti-vibration handle grip according to the present invention, with shown section plans A-A and B-B;

* figure 3 shows a longitudinal section of the anti-vibration handle grip of figure 2, according to the section plan B-B;

* figure 4 shows a cross-section of the anti-vibration handle grip of figure 2, according to the section plan A-A; and

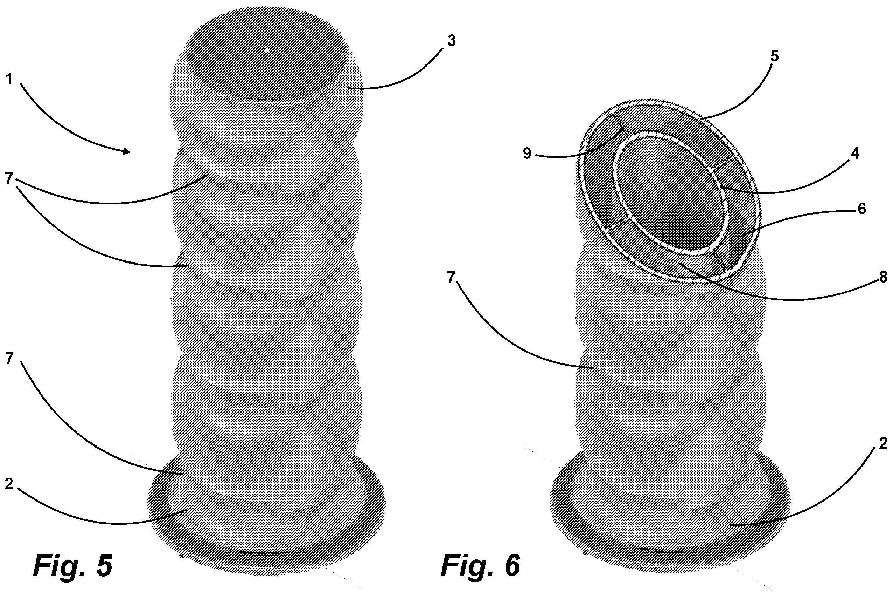

* figure 5 shows a perspective front view of the handle grip of figure 2; and

* figure 6 shows the view of figure 5 with an oblique section with respect to the longitudinal axis of the handle grip.

With reference to the figures, an anti-vibration handle grip is designated as a whole with 1.

The handle grip 1 is intended to be mounted on a receiving stem which, in a specific application example, consists of an end stem of a motorcycle handlebar.

On this regard, the handle grip could be of fixed type, or it could constitute a control member of the vehicle, and then it could be used to rotate said stem to control the accelerator or a brake, or to perform a gear shift.

Generally, the handle grip 1 has a substantially cylindrical shape and it is hollow, indeed to receive the terminal stem of a handlebar, in a forced interlocking relationship, which in turn can be reinforced by means of applying an adhesive, or other fastening systems such as bands or side joints, or a bayonet joint.

In each case, the handle grip has to be clasped in the driver's fist to control the vehicle direction and to assume a stable and safe driving position. Then, it is grasped by one hand, and it has a proximal end, adjacent to the thumb, and a distal end, adjacent to the little finger.

At the proximal end, the handle grip 1 comprises a stiff base disc 2, perforated in the centre thereof, the diameter thereof being larger than the diameter of the handle grip 1. By projecting diametrically, it acts as a guard and prevents the hand grasping the handle grip 1 from slipping from the handle grip towards the handlebar centre, and it eases the grip, by providing the user a reference about the position that his/her hand has to have to perform a firm grip.

At the distal end, the handle grip 1 has a case back 3 closing the internal cavity.

Therefore, the handle grip 1 has a hollow cylindrical structure longitudinally elongating, adapting to the extension of the receiving stem, and it is opened at said proximal end.

The body of the handle grip 1 comprises an internal cylinder 4, which is fitted with forced interlocking on the receiving stem shaped to adapt and to connect thereto.

Moreover, the handle grip 1 comprises an external casing 5, enclosing said internal cylinder 4 from the proximal end 4 to the distal end 5 of the anti-vibration handle grip 1, which constitutes its external surface in contact with the user's hand.

The external casing 5 is connected to the internal cylinder 4 by means of a series of circumferential junctions 6 forming a respective sequence of grooves 7 on the external surface of the external casing 5 and respective inner tubes 8, formed by the empty space between external casing 5 and internal cylinder 4, between each one of said grooves 7.

Going from the innermost groove 7, that is the one nearest to the proximal end 2 and corresponding to the index finger, to the subsequent groove 7, corresponding to the middle finger, the distance in longitudinal direction is designated with F, whereas the distance between this groove 7 and the subsequent one, corresponding to the ring finger, is designated with E, and the distance between the latter groove 7 and the subsequent and last one, corresponding to the little finger, is designated with C.

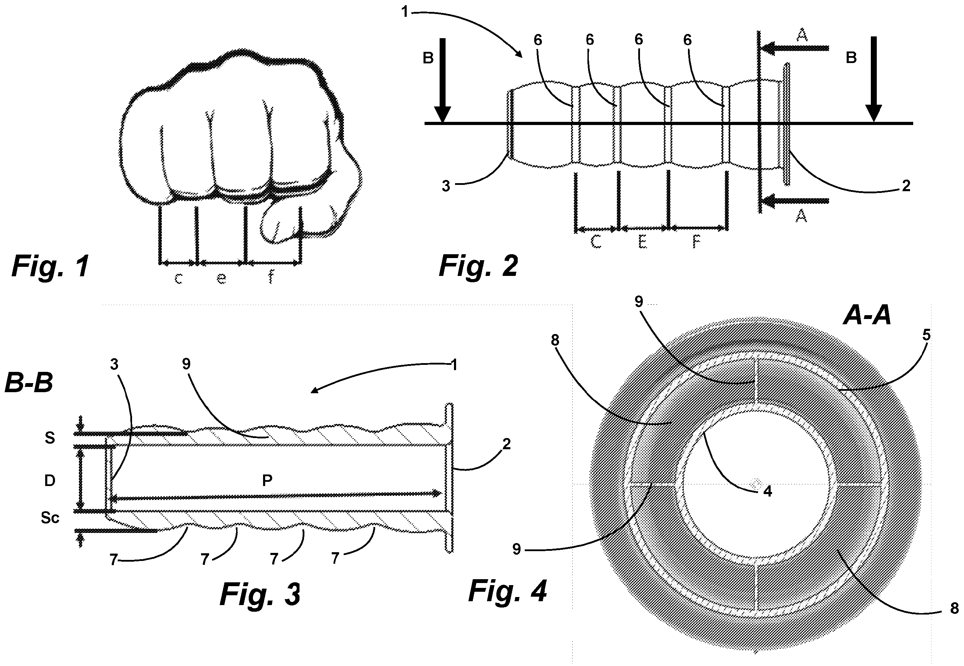

The anti-vibration handle grip 1 is intended to be grasped by a fist (figure 1), or by the hand fingers, tight and adjacent therebetween. The distance between the median planes of the single fingers, going from the index finger to the little finger, varies going from one finger to the other one.

The measurements corresponding to the distance between index finger and middle finger, to the distance between middle finger and ring finger and to the distance between ring finger and little finger can be detected by a user's hand, therefor one wishes to produce a customized anti-vibration handle grip, or one wishes to select it from a catalogue of anti-vibration handle grips according to the invention, thus by considering such measurements.

Therefore, once designated such measurements with:

f    - distance between index finger and middle finger

e    - distance between middle finger and ring finger

c    - distance between ring finger and little finger

one could check, by way of example only, the following condition:

$$f > e > c$$

However, these anthropometric measurements could vary from subject to subject, and the above-mentioned relation could not be checked, and be replaced by another relation.

Should, by way of example, the relation:

$$f > e > c$$

between the anthropometric measurements of the user's hand be valid, then the condition:

$$F > E > C$$

has to be checked, considering the presence of four grooves. Should the grooves 7 be only three, the condition F > E should be checked.

A different relation between "f", "e" and "c" will lead to a corresponding relation between "F", "E" and in case "C", so as to meet the anthropometric measurements of the user's hand which have been measured for customization and/or for selection from a catalogue.

Therefore, in this specific case, the distance in longitudinal direction between the groove nearest to the proximal end and the subsequent groove is higher than the distance in longitudinal direction between the latter and the still subsequent groove, and so on.

Conveniently, the handle grip can be implemented in customized way, by adapting the measurements of "F", "E" and "C" to the measurements of "f", "e" and "c".

In particular, the following relation:

$$F = f + x$$

$$E = e + x$$

$$C = c + x$$

will be applied, wherein 1.0 mm < x < 3.0 mm - preferably

$$1.5\ mm\ <\ x\ <\ 2.5\ mm$$

By way of example, x = 2.0 mm

With reference to figure 3, the measurements P (length of the internal cylinder 4) and D (diameter of the internal cylinder 4) depend upon the stem thereto the handle grip 1 is applied.

Moreover, the thickness "S" of the internal cylinder 4 and of the junction 6 is identified which, by way of example, could be higher than 5.0 mm.

The thickness "$S_c$" of the inner tube 8 will be defined by

$$S_c = S + y$$

wherein 1.5 mm < y < 3.5 mm
preferably 2.0 mm < y < 3.0 mm
and, by way of example, y = 2.5 mm

The external casing 5 and the internal cylinder 4 are further connected by longitudinal septa 9, formed by walls extending in a radial direction with respect to the longitudinal axis of the handle grip 1.

In the present embodiment example, such longitudinal septa 9 are four, and are equally spaced therebetween, that is separated by a 90° angle on the periphery of the handle grip 1. It is meant that the number of the septa 9 could vary to meet particular design requirements, having the function of stiffening the structure of the handle grip 1 and of easing the rotation transmission from the external casing 5, thereon the hand acts, to the receiving stem, in particular when it has to be rotated.

In particular, the external casing 5 and said longitudinal septa 9, and in case even the internal cylinder 4, are made of an anti-vibration material.

Then, between each groove 7 receiving a hand's finger four air cushions, inside the handle grip 1, are obtained, dampening pneumatically the stresses transmitted by the handlebar stem.

The above-described anti-vibration handle grip is able to lower, significantly, the stresses transmitted through the handlebar stems, in particular in the frequency range 8-50 Hz.

Moreover, it is possible to implement an ergonomic, in case customized, shape so as to have a greater driving comfort and a consequent lower gripping force on the handle grip.

In each case, it is possible to adapt the handle grip to the geometrical features of the handlebar stem on which the handle grip has to be installed, by obtaining an effective capability of responding rigidly to torsional stresses of the handle grip, so as not to alter the accelerator response during the rotation of the same.

At last, it is to be noted that the handle grip can be produced based upon the stem specifications and even based upon the anthropometric measurements of the user's hand, after their accurate measurements.

Based upon these measurements, it will be possible to select the handle grip with the most suitable measurements from a catalogue, or to produce it in a wholly customized way, for example by means of an additive printing process (3D printing).

Thanks to this additive printing process it is possible to produce the internal cylinder 4, the external casing 5 and the disc 2 in one single piece, and in case of different materials, with different stiffness.

Advantageously, the material of which the base disc consists 2 has a greater stiffness than the material of which the external casing 5 and the longitudinal septa 9 consist.

An example of stiffer material for the base disc 2 is a thermoplastic resin, preferably a polyester such as polyethylene terephthalate, and still more preferably a copolyester of polyethylene terephthalate glycol-modified (PETG), suitable to be used in additive processes.

This material allows to implement an optimum adherence with the metal surface of the tube constituting the stem thereon the handle grip is mounted.

The external casing 5 and the longitudinal septa are made of a more flexible and elastic material, for example a thermoplastic polyurethane (TPU), preferably a TPU-85A.

To the above-described anti-vibration handle grip a person skilled in the art, with the purpose of satisfying additional and contingent needs, could bring several additional modifications and variants, however all comprised within the protective scope of the present invention, as defined by the enclosed claims.

**Claims**

1. An anti-vibration handle grip (1), in particular for motorcycles, adapted to be mounted on a receiving stem and arranged to be grasped by one hand with a proximal end, adjacent to the thumb, and with a distal end, adjacent to the little finger, comprising:

• an internal cylinder (4), which is fitted on the receiving stem; and
• an external casing (5), enclosing said internal cylinder (4) from the proximal end to the distal end of the anti-vibration handle grip (1), and which is connected to said internal cylinder (4) by means of a sequence of circumferential junctions (6), **characterized by** forming a corresponding sequence of grooves (7) on the external surface of the external casing (5) and respective inner tubes (8), formed by the empty space between external casing (5) and internal cylinder (4), between each one of said grooves (7),

2. The anti-vibration handle grip (1) according to claim 1, wherein, considering a first distance F, a second distance E and a third distance C in longitudinal direction between adjacent grooves (7), and considering distances in a user's hand measured between the median planes of the single fingers:

f - distance between index finger and middle finger
e - distance between middle finger and ring finger
c - distance between ring finger and little finger

the anti-vibration handle grip (1) is produced in a customized way so that, the above-mentioned first, second and third longitudinal distances (F, E, C) being:

$$F = f + x$$

$$E = e + x$$

and in case C = c + x, x is comprised in a range between 1.0 mm and 3.0 mm.

3. The anti-vibration handle grip (1) according to claim 2, wherein the internal cylinder (4) and the external casing (5) are implemented in one additive printing process, after detecting the measurements of the distance between index finger and middle finger (f), of the distance between middle finger and ring finger (e) and possibly of the distance between ring finger and little finger (c) of a user.

4. The anti-vibration handle grip (1) according to claim 3, wherein said additive printing process produces the internal cylinder (4) and the external casing (5) in one single piece.

5. The anti-vibration handle grip (1) according to claim 3 or 4, wherein the internal cylinder (4) and the external casing (5) are made of different materials in said additive printing process.

6. The anti-vibration handle grip (1) according to any one of claims 2 to 5, wherein the first distance (F) in longitudinal direction between the groove (7) nearest to the proximal end (2) and the subsequent groove (7) is higher than the second distance (E) in longitudinal direction between the latter and the still subsequent groove (7).

7. The anti-vibration handle grip (1) according to any one of claims 2 to 6, wherein four grooves (7) are present defining the first, second and third longitudinal distances (F, E, C) between adjacent grooves (7) from the proximal end (2) to the distal end (3).

8. The anti-vibration handle grip (1) according to any one of claims 2 to 7, wherein

$$1.5 \ mm \ < \ x \ < \ 2.5 \ mm.$$

9. The anti-vibration handle grip (1) according to any one of the preceding claims, wherein the thickness S of the internal cylinder (4) and of each of the junctions (6), by way of example, is higher than 5.0 mm, and wherein the thickness $S_c$ of the inner tube (8) is defined by

$$S_c = S + y$$

wherein 1.5 mm < y < 3.5 mm.

10. The anti-vibration handle grip (1) according to claim 9, wherein 2.0 mm < y < 3.0 mm.

11. The anti-vibration handle grip (1) according to any one of the preceding claims, wherein the external casing (5) and the internal cylinder (4) are further connected by longitudinal septa (9), formed by walls extending in a radial direction with respect to the longitudinal axis of the anti-vibration handle grip (1).

12. The anti-vibration handle grip (1) according to claim 11, wherein said longitudinal septa (9) are equally spaced therebetween.

13. The anti-vibration handle grip (1) according to claim 12, comprising, at its own proximal end, a stiff base disc (2), perforated in the centre, the diameter thereof is larger than the diameter of the handle grip (1) so that it projects diametrically, wherein the material of which the base disc (2) consists has a greater stiffness than the material of which the external casing (5) and the longitudinal septa (9) consist.

**Patentansprüche**

1. Anti-Vibrations-Handgriff (1), insbesondere für Motorräder, eingerichtet um auf einem Aufnahmeschaft montiert zu werden und angeordnet, um von einer Hand ergriffen zu werden, mit einem proximalen Ende, in der Nähe des Daumens, und mit einem distalen Ende, in der Nähe des kleinen Fingers, aufweisend:

   • einen Innenzylinder (4), der auf den Aufnahmeschaft aufgesetzt ist; und
   • ein äußeres Gehäuse (5), das den Innenzylinder von dem proximalen Ende bis zum distalen Ende des Anti-Vibrations-Handgriffs (1) umschließt, und das mit dem Innenzylinder (4) mittels einer Abfolge von Umfangsverbindungen (6) verbunden ist,

   **gekennzeichnet durch** Bildung einer korrespondierenden Abfolge von Rillen (7) auf der Außenfläche des äußeren Gehäuses (5) und entsprechende Innenrohre (8), die durch den Leerraum zwischen dem äußeren Gehäuse (5) und Innenzylinder gebildet werden, zwischen jeder dieser Rillen (7).

2. Anti-Vibrations-Handgriff (1) nach Anspruch 1, wobei, unter Berücksichtigung von einem ersten Abstand F, einem zweiten Abstand E und einem dritten Abstand C in Längsrichtung zwischen benachbarten Rillen (7), und unter Berücksichtigung der Entfernungen in der Hand des Benutzers, gemessen zwischen den Medianebenen der einzelnen Finger:

   f - Abstand zwischen Zeigefinger und Mittelfinger
   e - Abstand zwischen Mittelfinger und Ringfinger
   c - Abstand zwischen Ringfinger und kleinem Finger
   der Anti-Vibrations-Handgriff (1) auf individuelle Weise hergestellt wird, so dass die vorgenannten ersten, zweiten und dritten Abstände (F, E; C) sind:

   $$F = f + x$$

   $$E = e + x$$

   Und im Fall C = c + x,
   wobei x in einem Bereich zwischen 1,0 mm und 3,0 mm liegt.

3. Anti-Vibrations-Handgriff (1) nach Anspruch 2, wobei der Innenzylinder (4) und das äußere Gehäuse (5) in einem additiven Druckverfahren hergestellt werden, nach der Erfassung der Abstandsmessungen zwischen Zeigefinger und Mittelfinger (f), des Abstands zwischen Mittelfinger und Ringfinger (e) und gegebenenfalls des Abstands zwischen Ringfinger und kleinem Finger (c) eines Benutzers.

4. Anti-Vibrations-Handgriff (1) nach Anspruch 3, wobei das additive Druckverfahren den Innenzylinder (4) und das äußere Gehäuse (5) in einem einzigen Stück herstellt.

5. Anti-Vibrations-Handgriff (1) nach Anspruch 3 oder 4, wobei der Innenzylinder (4) und das äußere Gehäuse (5) in dem additiven Druckverfahren aus unterschiedlichen Materialien hergestellt werden.

6. Anti-Vibrations-Handgriff (1) nach einem der Ansprüche 2 bis 5, wobei der erste Abstand (F) in Längsrichtung zwischen der Rille (7) am nächsten zum proximalen Ende (2) und der anschließenden Rille (7) größer ist als der zweite Abstand (E) in Längsrichtung zwischen dieser letzteren und der noch folgenden Rille (7).

7. Anti-Vibrations-Handgriff (1) nach einem einer der Ansprüche 2 bis 6, wobei vier Rillen (7) vorhanden sind, die den ersten, zweiten, und dritten Längsabstand (F, E, C) zwischen benachbarten Rillen (7) vom proximalen Ende (2) zum distalen Ende (3) definieren.

8. Anti-Vibrations-Handgriff (1) nach einem der Ansprüche 2 bis 7, wobei 1.5 mm < x < 2,5 mm ist.

9. Anti-Vibrations-Handgriff (1) nach einem der vorhergehenden Ansprüche, wobei die Dicke S von dem Innenzylinder (4) und von jeder der Verbindungen (6), zum Beispiel, größer als 5.0 mm ist, und wobei die Dicke $S_C$ des Innenrohrs (8) definiert ist durch

   $$S_C = S + y,$$

   wobei 1.5 mm < y < 3,5 mm ist.

10. Anti-Vibrations-Handgriff (1) nach Anspruch 9, wobei 2.0 mm < y < 3.0 mm ist.

11. Anti-Vibrations-Handgriff (1) nach einem der vorhergehenden Ansprüche, wobei das äußere Gehäuse (5) und der Innenzylinder (4) weiterhin verbunden sind durch Längssepten (9), gebildet durch Wände, die sich in einer radialen Richtung in Bezug auf die Längsachse des Anti-Vibrations-Handgriffs (1) erstrecken.

**12.** Anti-Vibrations-Handgriff (1) nach Anspruch 11, wobei die Längssepten (9) dazwischen gleichmäßig beabstandet sind.

**13.** Anti-Vibrations-Handgriff (1) nach Anspruch 12, aufweisend, die seinem eigenen proximalen Ende, eine steife Basisscheibe (2), in der Mitte gelocht, deren Durchmesser größer ist als der Durchmesser des Handgriffs (1), so dass sie diametral vorspringt, wobei das Material, aus dem die Basisscheibe (2) besteht, eine größere Steifigkeit hat als die Material, aus dem das äußere Gehäuse (5) und die Längssepten (9) bestehen.

**Revendications**

**1.** Poignée de préhension anti-vibrations (1), en particulier pour des motocyclettes, conçue pour être montée sur une tige de réception et agencée pour être saisie d'une main avec une extrémité proximale, adjacente au pouce, et avec une extrémité distale, adjacente à l'auriculaire, comprenant :

> - un cylindre interne (4), qui est ajusté sur la tige de réception ; et
> - un boîtier externe (5), englobant ledit cylindre interne (4) de l'extrémité proximale à l'extrémité distale de la poignée de préhension anti-vibrations (1), et qui est raccordée audit cylindre interne (4) au moyen d'une séquence de jonctions (6) circonférentielles, **caractérisée en ce qu'**elle forme une séquence correspondante de rainures (7) sur la surface externe du boîtier externe (5) et des tubes internes (8) respectifs, formés par l'espace vide entre le boîtier externe (5) et le cylindre interne (4), entre chacune desdites rainures (7).

**2.** Poignée de préhension anti-vibrations (1) selon la revendication 1, dans laquelle, en prenant en compte une première distance F, une deuxième distance E et une troisième distance C dans une direction longitudinale entre des rainures (7) adjacentes, et en prenant en compte des distances dans la main d'un utilisateur mesurées entre les plans médians des doigts uniques :

> f - distance entre l'index et le majeur
> e - distance entre le majeur et l'annulaire
> c - distance entre l'annulaire et l'auriculaire
> la poignée de préhension anti-vibrations (1) est produite d'une manière personnalisée de sorte que les première, deuxième et troisième distances longitudinales (F, E, C) susmentionnées sont :

$$F = f + x$$

$$E = e + x$$

Et, le cas échéant, C = c + x,
x étant compris dans une plage entre 1,0 mm et 3,0 mm.

**3.** Poignée de préhension anti-vibrations (1) selon la revendication 2, dans laquelle le cylindre interne (4) et le boîtier externe (5) sont mis en oeuvre dans un processus d'impression additive, après la détection des mesures de la distance entre l'index et le majeur (f), de la distance entre le majeur et l'annulaire (e) et éventuellement de la distance entre l'annulaire et l'auriculaire (c) d'un utilisateur.

**4.** Poignée de préhension anti-vibrations (1) selon la revendication 3, dans laquelle le processus d'impression additive produit le cylindre interne (4) et le boîtier externe (5) en une seule pièce.

**5.** Poignée de préhension anti-vibrations (1) selon la revendication 3 ou 4, dans laquelle le cylindre interne (4) et le boîtier externe (5) sont composés de matériaux différents dans ledit processus d'impression additive.

**6.** Poignée de préhension anti-vibrations (1) selon l'une quelconque des revendications 2 à 5, dans laquelle la première distance (F) dans la direction longitudinale entre la rainure (7) la plus proche de l'extrémité proximale (2) et la rainure (7) suivante est supérieure à la deuxième distance (E) dans la direction longitudinale entre cette dernière et la rainure (7) encore suivante.

**7.** Poignée de préhension anti-vibrations (1) selon l'une quelconque des revendications 2 à 6, dans laquelle quatre rainures (7) sont présentes, définissant les première, deuxième et troisième distances longitudinales (F, E, C) entre des rainures (7) adjacentes de l'extrémité proximale (2) à l'extrémité distale (3).

**8.** Poignée de préhension anti-vibrations (1) selon l'une quelconque des revendications 2 à 7, dans laquelle

$$1{,}5 \text{ mm} < x < 2{,}5 \text{ mm}.$$

**9.** Poignée de préhension anti-vibrations (1) selon l'une quelconque des revendications précédentes, dans laquelle l'épaisseur S du cylindre interne (4) et de chacune des jonctions (6), par exemple, est supérieure à 5,0 mm, et dans laquelle l'épaisseur $S_c$ du tube interne (8) est définie par $S_c = S + y$

dans laquelle 1,5 mm < y < 3,5 mm.

10. Poignée de préhension anti-vibrations (1) selon la revendication 9, dans laquelle 2,0 mm < y < 3,0 mm.

11. Poignée de préhension anti-vibrations (1) selon l'une quelconque des revendications précédentes, dans laquelle le boîtier externe (5) et le cylindre interne (4) sont en outre raccordés par des cloisons longitudinales (9), formées par des parois s'étendant dans une direction radiale par rapport à l'axe longitudinal de la poignée de préhension anti-vibrations (1).

12. Poignée de préhension anti-vibrations (1) selon la revendication 11, dans laquelle lesdites cloisons longitudinales (9) sont espacées de manière égale entre elles.

13. Poignée de préhension anti-vibrations (1) selon la revendication 12, comprenant, au niveau de sa propre extrémité proximale, un disque de base rigide (2), perforé au centre, dont le diamètre est plus grand que le diamètre de la poignée de préhension (1) de sorte qu'il fait saillie diamétralement, dans laquelle le matériau dont le disque de base (2) est constitué présente une rigidité supérieure à celle du matériau dont le boîtier externe (5) et les cloisons longitudinales (9) sont constitués.

**Fig. 1**

**Fig. 2**

**B-B**

**Fig. 3**

**A-A**

**Fig. 4**

EP 4 301 653 B1

**Fig. 5**

**Fig. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 933451
- US 2618986 A
- US 599131 A
- JP S5037249 U
- WO 9939970 A1